# EUROPÄISCHE PATENTSCHRIFT

(11) **EP 2 856 206 B1**
(45) Veröffentlichungstag und Bekanntmachung des Hinweises auf die Patenterteilung: **03.04.2019**
(21) Anmeldenummer: 13716995.9
(22) Anmeldetag: 05.04.2013
(51) Int. Cl.: G01S 15/93, G01S 7/521, G01S 15/08, G10K 9/122, G10K 9/20, G10K 11/18, H04R 31/00

(54) **ULTRASCHALLSENSOR SOWIE VORRICHTUNG UND VERFAHREN ZUR MESSUNG EINES ABSTANDS ZWISCHEN EINEM FAHRZEUG UND EINEM HINDERNIS**
ULTRASOUND SENSOR AND DEVICE AND METHOD FOR MEASURING A DISTANCE BETWEEN A VEHICLE AND AN OBSTACLE
CAPTEUR À ULTRASONS AINSI QUE DISPOSITIF ET PROCÉDÉ POUR MESURER UNE DISTANCE ENTRE UN VÉHICULE ET UN OBSTACLE

(30) Priorität: 31.05.2012 DE 102012209238
(43) Veröffentlichungstag der Anmeldung: 08.04.2015
(73) Patentinhaber: Robert Bosch GmbH, 70442 Stuttgart (DE)
(72) Erfinder: BARTYLLA, David, 71229 Leonberg (DE)
(86) Internationale Anmeldenummer: PCT/EP2013/057247
(87) Internationale Veröffentlichungsnummer: WO 2013/178390

(56) Entgegenhaltungen:
- DE-A1- 4 238 924
- DE-A1-102008 000 690
- DE-A1-102008 040 905

## Beschreibung

### Stand der Technik

Die Erfindung geht aus von einem Ultraschallsensor nach der Gattung des Hauptanspruchs. Aus dem Stand der Technik sind Ultraschallsensoren bekannt, die zur Abstandsmessung zwischen Fahrzeugen und Hindernissen verwendet werden, etwa zur Unterstützung eines Einparkvorgangs. Die Sensoren verfügen über eine schwingfähige Membran, die im Allgemeinen über ein Piezoelement in Resonanz zu einer Schwingung angeregt wird. Das hierdurch erzeugte Schallsignal wird von der Membran des Ultraschallsensors ausgestrahlt, von einem Hindernis reflektiert und von dem gleichen oder einem benachbarten Ultraschallsensor empfangen. Aus der Laufzeit des Schallsignals kann der Abstand zwischen dem Sensor und dem Hindernis bestimmt werden. Durch Anwendung des sogenannten Trilaterationsprinzips kann durch Vergleich der vom aussendenden Sensor selbst empfangenen Signale (Direktecho) und der von benachbarten Sensoren empfangenen Signale (Kreuzecho) zusätzlich zum Abstand auch die Position des Hindernisses innerhalb der Sensorebene bestimmt werden.

Im Allgemeinen ist das Piezoelement am Boden eines topfartig ausgebildeten Gehäuses angeordnet, der z.B. im Stoßfänger des Fahrzeugs montiert ist, wobei das Piezoelement mit einer Auswerteelektronik derart verbunden ist, dass die Gesamtheit der Einrichtung den entsprechenden Ultraschallsensor bildet. Damit der von dem Piezoelement erzeugte Schall entsprechend abgestrahlt bzw. auch empfangen werden kann, sind die Gehäuse so geformt, dass sie eine Resonanz im Frequenzbereich der verwendeten Ultraschallwellen aufweisen. Die Resonanz wird dabei durch die Abmessungen und die Schwingungseigenschaften des Gehäuses bestimmt, insbesondere durch die Ausbildung der Membran. Derartige Ultraschallsensoren sind beispielsweise in der DE 10 2008 040 905 A1 beschrieben.

Üblicherweise sind mindestens vier derartige Sensoren am Heck des Fahrzeugs montiert. Zur zuverlässigen und genauen Bestimmung des Abstands zu einem Hindernis, sendet zunächst einer der Sensoren ein Ultraschallsignal aus. Alle Sensoren empfangen das Echosignal. Dieser Vorgang wird dann mit jedem der Sensoren in einer festgelegten Reihenfolge ausgeführt bis das endgültige Ergebnis der Messung vorliegt und der Zyklus von vorne beginnen kann. Die zeitliche Auflösung der Messung ist durch die Zyklusdauer begrenzt.

In der DE 10 2008 000 690 A1 wird ein Verfahren zum Adressieren einer Mehrzahl von Sende- und Empfangseinheiten einer auf Ultraschall basierenden Abstandsmesseinrichtung beschrieben. Dabei wird jeder der Sende- und Empfangseinheiten eine eindeutige Adresse zugewiesen, und zwar auf Grundlage einer Veränderung einer Sende- und/oder Empfangseigenschaft jeweils einer der Sende- und Empfangseinheiten durch zeitversetztes Manipulieren einer Komponente der jeweiligen Sende- und Empfangseinheiten.

Aus DE 4238924 A1 ist ein elektroakustischer Wandler bekannt, der einen piezoelektrischen Keramikkörper zur Anregung einer Membranfläche aufweist, sowie ein um den piezoelektrischen Keramikkörper herum in Form eines Rings angeordnetes Begrenzungsmittel. Die Anregung des piezoelektrischen Keramikkörpers erfolgt außerdem auf einer Oberwelle der Resonanzfrequenz des piezoelektrischen Keramikkörpers. Durch sich dadurch ausbildende zusätzliche Schwingungsknoten wird die Membranfläche virtuell in mehrere einzelne Membranflächen unterteilt, wodurch sich der gesamte Öffnungswinkel der Schallkeule vergrößert.

### Offenbarung der Erfindung

Um die zeitliche Auflösung einer Vorrichtung zur Abstandsmessung mit Ultraschallsensoren zu verbessern, ist es denkbar, Ultraschallsignale mit unterschiedlichen Frequenzen zu verwenden. Dadurch können die verschiedenen Sensoren gleichzeitig oder mit sehr kurzen zeitlichen Abständen Signale aussenden, die dann beispielsweise mittels eines Bandpassfilters separiert werden können. Dabei ist es wünschenswert, baugleiche Ultraschallsensoren zu verwenden.

Die im Automobil üblicherweise genutzten Ultraschallsensoren senden Schallsignale mit einer festgelegten Frequenz, die einer Resonanzfrequenz des Ultraschallsensors entspricht, und üblicherweise im Bereich von 50 kHz liegt. Grundsätzlich ist es möglich, einen Ultraschallsensor bei verschiedenen Frequenzen, die seinen Eigenfrequenzen unterschiedlicher Ordnungen entsprechen, zu betreiben. Die Membran schwingt bei verschiedenen Frequenzen geometrisch unterschiedlich. So entstehen verschiedene Schwingungsformen, von denen jedoch nicht alle in gleicher Weise für den Betrieb eines Ultraschallsensors in einem Fahrzeug, insbesondere zur Abstandsmessung, geeignet sind, da sich durch die unterschiedlichen Schwingungsformen z. B. unterschiedliche Richtcharakteristiken (Abstrahlcharakteristiken) und somit unterschiedliche Schalldrücke der abgestrahlten Schallwellen ergeben. Zu hohe Frequenzen, von beispielsweise mehr als 100 kHz, sind für eine Abstandsmessung bei einem Fahrzeug nicht geeignet, da Schallwellen in diesem Frequenzbereich durch Luft sehr stark gedämpft werden.

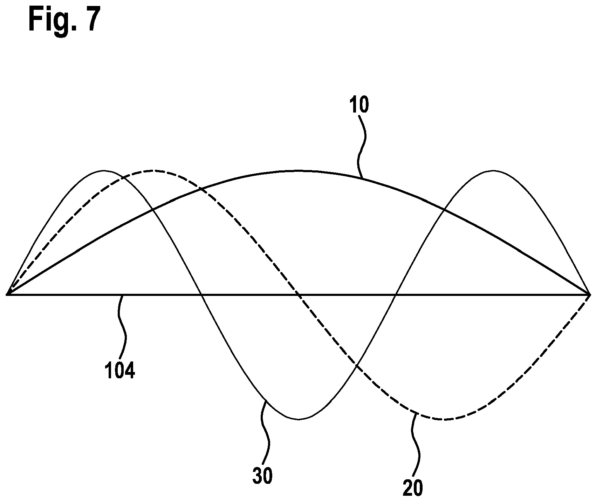

Als Grundschwingung oder erste Schwingungsform der Membran eines Ultraschallsensors wird hier eine Schwingungsform angesehen, deren Auslenkung in etwa durch eine halbe Sinusschwingung beschrieben werden kann. Betrachtet man eine Schwingungsform, die die Form einer ganzen Sinusschwingung hat, so kann man von der zweiten Schwingungsform sprechen. Wird die dritte Schwingungsform beschrieben, so hat die Auslenkung der Membran/Platte den Verlauf von etwa eineinhalb Sinusschwingungen (siehe Figur 7). Diese Beschreibung gilt allgemein für schwingende Platten, die gelenkig gelagert sind. Ist die Einspannung der Platte fest, so weicht die Schwingungsform im Randbereich durch eine geringere Auslenkung ab. Der qualitative Verlauf der Schwingungsform bleibt allerdings erhalten.

Üblicherweise ist das Wandlerelement, das die Schwingungsform der Membran anregt, mittig auf der Membran befestigt. Sogenannte symmetrische Schwingungsformen, die ein ganzzahliges Vielfaches einer Sinusschwingung darstellen - zum Beispiel die zweite Schwingungsform, können durch ein mittig angeordnetes Wandlerelement nicht angeregt werden, da sich hierbei die eingebrachte Energie genau auslöscht. Ist das Wandlerelement nicht exakt mittig angeordnet, so können diese symmetrischen Schwingungsformen zwar angeregt werden, führen aber zu kleinen Auslenkungen und somit zu geringeren Schalldrücken. Aus diesem Grund werden im Folgenden hauptsächlich die Grundschwingung bzw. erste Schwingungsform und die dritte Schwingungsform betrachtet.

Unter Membran wird im Zusammenhang der vorliegenden Erfindung eine dünne Platte verstanden, die eine gewisse Biegesteifigkeit besitzt.

Erfindungsgemäß wird demnach ein Ultraschallsensor vorgeschlagen, der ein Gehäuse mit einer umlaufenden Seitenwand und einer Bodenfläche umfasst, also im Wesentlichen topfförmig ausgebildet ist. Die Bodenfläche ist in bekannter Weise als Membran ausgebildet. Auf der Bodenfläche ist ein, beispielsweise als piezoelektrisches Element ausgebildetes Wandlerelement angeordnet, das zur Erzeugung und Erfassung von Ultraschallschwingungen dient. Erfindungsgemäß ist auf der Bodenfläche mindestens ein Masseelement derart angeordnet, dass sich der Widerstand des Masseelements gegen eine Schwingung der Membran (Impedanz Z) mit steigender Schwingungsfrequenz erhöht. Die Kraft, die durch das mindestens eine Masseelement auf die Membran ausgeübt wird, erhöht sich also mit steigender Frequenz. Ebenso kann sich ein von dem mindestens einen Masseelement auf die Membran ausgeübtes Drehmoment mit steigender Frequenz erhöhen. Dabei besteht zwischen der Frequenz f und der Impedanz Z_längs der bekannte Zusammenhang Z = 2·π·m·f, wobei m die schwingende Masse ist. Diese Formel gilt strenggenommen nur für eine Längsbewegung der Masse. Bei einer zusätzlichen Drehbewegung der Masse, kommt noch eine zusätzliche Komponente Z_dreh hinzu: Z_dreh = θ·2·π·f, wobei θ die Drehträgheit der Masse bezeichnet. Daraus ergeben sich zusätzliche Gestaltungsmöglichkeiten der Impedanz durch geometrische Variationen des Masseelements, die die Gesamtimpedanz Z beeinflussen.

Es wird demnach durch die Anordnung des mindestens einen Masseelements eine Einspannung der Membran geschaffen, die ihr Verhalten frequenzabhängig ändert. Durch die Anordnung des Masseelements oder der Masseelemente wird erzielt, dass bei niederen Schwingungsfrequenzen der Widerstand des Masseelements oder der Masseelemente gegen die Schwingung der Membran gering ist, bei höheren Frequenzen jedoch ansteigt. Dieser Effekt ist darin begründet dass unterschiedliche Resonanzfrequenzen unterschiedliche Schwingungsformen der Membran hervorrufen. Demnach sind die Masseelemente bevorzugt in Bereichen angeordnet, die bei einer ersten Schwingungsform (Grundschwingung) mit niedriger Resonanzfrequenz nur eine geringe Auslenkung erfahren, jedoch bei der dritten Schwingungsform mit höherer Frequenz stärker ausgelenkt werden.

Damit wird bewirkt, dass bei der Anregung einer Schwingung höherer Ordnung eine Resonanzfrequenz erzielt wird, die im Verhältnis zu einer Grundfrequenz niedriger ist, als wenn kein Masseelement vorhanden wäre. Damit ist es beispielsweise möglich, bei einer ersten Resonanzfrequenz f₁ der Grundschwingung, die im Bereich von 30 bis 60 kHz liegt, eine zweite, der dritten Schwingungsform zugeordnete, anregbare Resonanzfrequenz f₃ von 100 kHz oder weniger zu erreichen. Das Verhältnis der Resonanzfrequenzen wird allgemein durch die Anordnung, Masse und Form der Masseelemente sowie der Geometrie, sowie dem gewählten Material der Membran bestimmt.

Durch die definierte Positionierung der Masseelemente wird bevorzugt die dritte Schwingungsform derart verändert, dass die dritte Schwingungsform in ihrer Form und Richtcharakteristik der Grundschwingung angenähert wird. Dadurch eignen sich in vorteilhafter Weise die Frequenz und die Richtcharakteristik der dritten Schwingungsform für die Abstandsbestimmung mittels des erfindungsgemäßen Ultraschallsensors ebenso wie die Grundschwingung. Die Masseelemente reduzieren an den Stellen, an denen sie angebracht werden, die Auslenkung der Membran. Damit wird erreicht, dass auch bei Anregung der dritten Schwingungsform hauptsächlich der Bereich der Membran zwischen den Masseelementen ausgelenkt wird. In Folge davon verkleinert sich die insgesamt schwingende Fläche, was zu einer Verbreiterung der Richtcharakteristik führt. Die im Vergleich zur Grundschwingung höhere Frequenz führt gleichzeitig zu einer Verengung der Richtcharakteristik. Letztendlich sind beide Effekte gegenläufig und heben sich im Idealfall vollständig auf. Somit ist es durch eine erfindungsgemäße Anordnung mindestens eines Masseelements auf der Membran möglich, mit der dritten Schwingungsform eine ähnliche Richtcharakteristik wie bei der Grundschwingform zu erzielen.

In einem bevorzugten Ausführungsbeispiel eines erfindungsgemäßen Ultraschallsensors sind mehrere Masseelemente auf der Bodenfläche angeordnet. Da das Wandlerelement bevorzugt mittig auf der Bodenfläche befestigt ist, sind die Masseelemente bevorzugt mit regelmäßigen Abständen und/oder symmetrisch um das Wandlerelement angeordnet. Die Masseelemente weisen außerdem bevorzugt eine, insbesondere teilzylindrische, Außenfläche auf, die konzentrisch zu der umlaufenden Seitenwand des Gehäuses ausgerichtet ist.

In einer der besonders vorteilhaften Ausführung weist der Ultraschallsensor zwei Masseelemente auf, die bezüglich mindestens einer senkrecht zur Bodenfläche verlaufenden Mittelebene spiegelsymmetrisch zueinander angeordnet sind. Damit wird in vorteilhafter Weise eine symmetrische Schwingung der Membran erzielt.

Zur Herstellung eines erfindungsgemäßen Ultraschallsensors ist es besonders vorteilhaft, wenn mindestens eines der Masseelemente eine im Wesentlichen hohlzylindrische oder hohlzylindersegmentartige Struktur aufweist. In diesem Fall ist es beispielsweise möglich das oder die Masseelemente auszubilden, in dem eine Verdickung der umlaufenden Seitenwand des Gehäuses durch Einbringen eines Schlitzes von der Seitenwand getrennt wird und damit ein oder mehrere Masseelemente ausbildet. Da die Bodenfläche bevorzugt kreisförmig und damit die umlaufende Seitenwand im Wesentlichen zylindrisch ausgebildet ist, ergibt sich damit eine hohlzylindrische oder hohlzylindersegmentartige Struktur des Masseelements bzw. der Masseelemente. Bevorzugt weisen die Masseelemente eine Höhe von 30 bis 80 % der Gesamthöhe des Gehäuses auf. Aber auch Masseelemente mit kleinerer oder größerer Höhe sind denkbar.

Die Erfindung sieht auch ein Verfahren zur Herstellung eines Ultraschallsensors vor, das die folgenden Schritte umfasst:
a. Bereitstellen eines Gehäuses mit einer umlaufenden Seitenwand und einer Bodenfläche, die als Membran ausgebildet ist, auf welcher ein Wandlerelement zur Erzeugung von Ultraschallschwingungen angebracht ist, wobei die Seitenwand aufweist:
   - einen unteren Seitenwandabschnitt , in welchem die Seitenwand in einer zur Bodenfläche parallelen Ebene ein rotationsasymmetrisches Profil aufweist;
      und
   - einen oberen Seitenwandabschnitt, in welchem die Seitenwand zu einem oberen Rand der Seitenwand hin in ein wesentlich rotationssymmetrisches Profil übergeht
b. Einbringen eines Schlitzes in den unteren Seitenwandabschnitt derart, dass mindestens ein auf der Bodenfläche angeordnetes Masseelement gebildet wird.

Das in Schritt a. bereitgestellte Gehäuse, entspricht einem Ultraschallwandlergehäuse, wie es bereits üblicherweise eingesetzt wird. Beschrieben ist ein derartiges Gehäuse in der DE 10 2008 040 905 A1. Durch das erfindungsgemäße Verfahren lässt sich aus einem derartigen Gehäuse in einfacher Weise ein Gehäuse für einen erfindungsgemäßen Ultraschallsensor herstellen. Durch Einbringen von einem oder mehreren, insbesondere axial bzw. senkrecht zur Bodenfläche verlaufender Schlitze, werden die bereichsweise vorgesehenen Verdickungen der Seitenwand im unteren Seitenwandabschnitt von der Seitenwand abgetrennt. Somit entstehen Masseelemente, die auf der Bodenfläche angeordnet sind, und die die erfindungsgemäße Wirkung auf die Resonanzfrequenzen des Ultraschallsensors entfalten.

Erfindungsgemäß wird dabei aus dem unteren Seitenwandabschnitt zumindest ein im Wesentlichen hohlzylindersegmentförmiges Masseelement gebildet.

Im Rahmen der vorliegenden Erfindung wird außerdem eine Vorrichtung zur Messung eines Abstands zwischen einem Fahrzeug und einem Hindernis angegeben. Die Vorrichtung umfasst mindestens zwei akustische Sensoren, die an einem Fahrzeug angeordnet sind, wobei die Sensoren als erfindungsgemäße Ultraschallsensoren ausgebildet sind und demnach bei mindestens zwei unterschiedlichen Resonanzfrequenzen betrieben werden können.

Die Vorrichtung ist geeignet, das im Folgenden beschriebene Verfahren zur Bestimmung eines Abstands zwischen einem Fahrzeug und einem Hindernis auszuführen:
- ein erster Sensor sendet ein akustisches Signal einer ersten Frequenz aus,
- ein zweiter Sensor sendet zeitgleich oder innerhalb einer festgelegten Sendezykluszeit ein akustisches Signal einer zweiten, von der ersten Frequenz verschiedenen, Frequenz aus,
- ein erstes Echosignal des ersten akustischen Signals wird von mindestens einem der Sensoren erfasst,
- ein zweites Echosignal des zweiten akustischen Signals wird von mindestens einem der Sensoren erfasst,
- der Abstand zwischen dem Fahrzeug und dem Hinderniss wird abhängig von den erfassten Größen berechnet.

Unter der festgelegten Sendezykluszeit wird ein Zeitintervall verstanden, innerhalb dem die Bestimmung des Abstands abgeschlossen ist. Im Stand der Technik, d.h. bei Verwendung von Ultraschallsensoren mit identischen Sendefrequenzen, kann innerhalb der Sendezykluszeit nur ein Sensor ein Signal aussenden. Diese Einschränkung ist bei dem erfindungsgemäßen Messverfahren nicht mehr nötig, da zwei unterschiedliche Sendefrequenzen zur Verfügung stehen. Idealerweise senden der erste und der zweite Sensor gleichzeitig ein akustisches Signal aus.

Wie unmittelbar einsichtig ist, liegt es im Rahmen der Erfindung auch mehr als zwei, beispielsweise vier oder sechs Sensoren für ein derartiges Verfahren einzusetzen. Es können beispielsweise Gruppen von jeweils zwei Sensoren gebildet werden, die jeweils zeitgleich bei unterschiedlichen Frequenzen senden. Damit reduziert sich die Messdauer im Vergleich zu herkömmlichen Systemen idealerweise um einen Faktor Zwei.

Bevorzugt werden das Echosignal des ersten akustischen Signals und das Echosignal des zweiten akustischen Signals von einem Sensor empfangen, wobei eine Trennung der Signale erfolgt, insbesondere mittels eines Bandpass-Filters.

### Kurze Beschreibung der Zeichnungen

Die vorliegende Erfindung wird nachfolgend anhand bevorzugter Ausführungen und beigefügter Figuren erläutert.
Figur 1A zeigt eine Draufsicht auf einen Ultraschallsensor gemäß einer Ausführung der Erfindung.
Figur 1B zeigt eine Schnittansicht des Ultraschallsensors aus Figur 1A.
Figur 2 zeigt eine Draufsicht auf einen Ultraschallsensor gemäß einer zweiten Ausführung der Erfindung.
Figur 3 zeigt eine Schnittansicht eines Ultraschallsensors gemäß einer dritten Ausführung der Erfindung mit einer ersten angeregten Schwingungsform.
Figur 4 zeigt eine Schnittansicht des Ultraschallsensors gemäß der dritten Ausführung der Erfindung mit einer zweiten angeregten Schwingungsform.
Figur 5 stellt ein erfindungsgemäßes Verfahren zur Herstellung eines Ultraschallsensors gemäß Figur 1 dar.
Figur 6 zeigt schematisch ein Fahrzeug mit einer Vorrichtung zur Abstandsmessung gemäß der Erfindung.
Figur 7 zeigt schematisch verschiedene Schwingungsformen einer Membran.

### Ausführungen der Erfindung

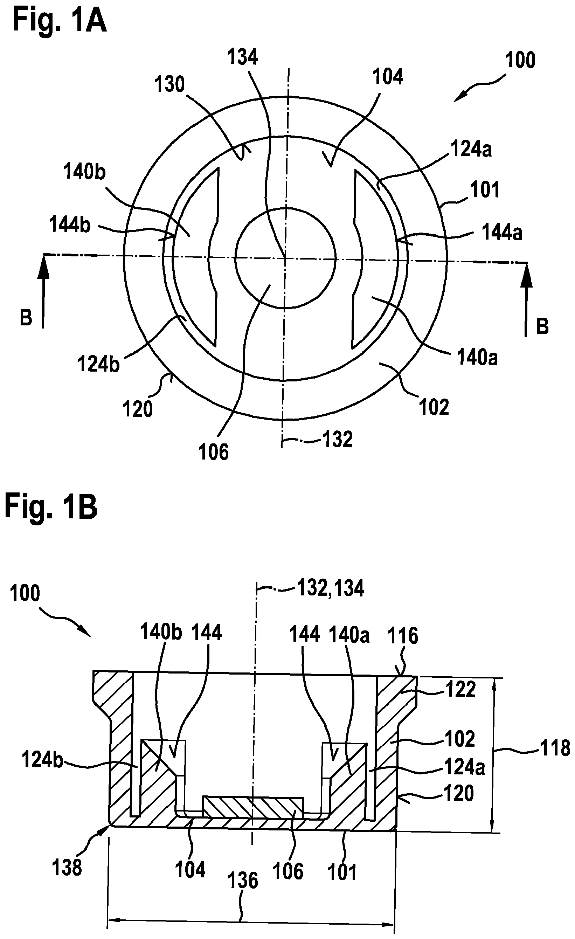

Figur 1A zeigt in einer Draufsicht einen Ultraschallsensor 100, der zur Verwendung in einem Einparkhilfesystem für ein Kraftfahrzeug geeignet ist. Der Ultraschallsensor umfasst ein topfartiges Gehäuse 101 mit einer Bodenfläche 104 und einer diese ringförmig umgebenden Seitenwand 102. Das Gehäuse 101 ist aus einem metallischen Werkstoff wie z. B. Aluminium geformt oder gefräst zum Schutz vor Korrosion mit einer Grundierung beschichtet.

Der Blick des Betrachters der Darstellung fällt von oben ins Innere des Gehäuses 101, sodass die Innenseite der Bodenfläche 104 dem Betrachter zugekehrt ist. Ein elektromechanisches Wandlerelement 106 wie hier beispielhaft ein zylinderscheibenförmiges Piezoelement ist auf die Innenseite der Bodenfläche 104 aufgebracht, beispielsweise geklebt, und kontaktiert. Aus Gründen der Übersichtlichkeit wurde auf die Darstellung der Kontaktierung verzichtet. Der verbleibende Raum im Inneren des Gehäuses 101 ist mit einem dämpfenden Material aufgefüllt, das ebenfalls nicht dargestellt ist. Weiterhin kann das gezeigte Gehäuse 101 von weiteren Umhüllungen z.B. aus weichen Elastomeren umgeben sein.

Die Seitenwand 102 weist an ihrem oberen Rand, auf den der Blick des Betrachters in Figur 1A fällt, eine parallel zur Zeichenebene und zur Bodenfläche 104 liegende Randfläche auf, die von zwei konzentrischen Kreislinien begrenzt ist, deren Mittepunkt auf einer Symmetrieachse 134 liegt, relativ zu der eine Außenkontur 120 des Gehäuses 101 rotationssymmetrisch ausgebildet ist.

Auf der Bodenfläche 104 sind zwei Masseelemente 140a und 140b ausgebildet. Die Masseelemente 140a und 140b weisen eine ringsegmentförmige Grundfläche auf und sind gegenüberliegend zueinander und spiegelsymmetrisch zu einer Symmetrieebene 132 angeordnet, wobei die Symmetrieebene 132 senkrecht zur Bodenfläche 104 verläuft und die Symmetrieachse 134 enthält. Die Masseelemente 140a und 140b weisen jeweils eine zylindrische Außenkonturfläche 144a und 144b auf, die von der Innenfläche 130 der Seitenwand 102 jeweils durch einen Spalt bzw. Schlitz 124a und 124b getrennt bzw. beabstandet sind. Die Masseelemente 140a und 140b sind derart auf der Bodenfläche 104 angeordnet, dass sich der Widerstand des Masseelements gegen eine Schwingung der Membran (Impedanz) mit steigender Schwingungsfrequenz erhöht. Die Masseelemente 140a und 140b können einteilig mit dem Gehäuse 101 ausgebildet sein, oder als separate Bauteile auf die Bodenfläche 104 aufgebracht werden.

Figur 1B zeigt eine Schnittansicht des Ultraschallsensors 100 aus Figur 1A entlang einer in Fig. 1A mit B-B markierten Schnittebene, die durch die Symmetrieachse 134 der Außenkontur 120 geht. Die Außenkontur 120 ist über den überwiegenden Teil einer Gesamthöhe 118 des Gehäuses 101 sich erstreckend in Form eines Zylinders mit Außendurchmesser 136 gebildet, wobei die Zylinderachse auf der Symmetrieachse 134 liegt. Von einer Zylinderform weicht die Außenkontur 120 insofern ab, als am oberen Rand 116 des Gehäuses 101 in bekannter Weise eine als Stabilisierungsring wirkende Verdickung 122 ausgebildet und ferner die untere Kante 138 der Seitenwand 102 abgerundet ist, an der die Seitenwand 102 mit der Außenseite der Bodenfläche 104 zusammentrifft.

Aus der Zusammenschau der Figuren 1A und 1B wird deutlich, dass die Masseelemente 140a und 140b jeweils im Wesentlichen die Form eines Hohlzylindersegments aufweisen, wobei die Stirnflächen 144 der Masseelemente in diesem Ausführungsbeispiel jeweils eine Abschrägung aufweisen. Auch andere Gestaltungen sind denkbar, wie beispielsweise eine flache, parallel zur Bodenfläche verlaufende Ausbildung der Stirnflächen 144 oder ein konkaver oder konvexer Verlauf.

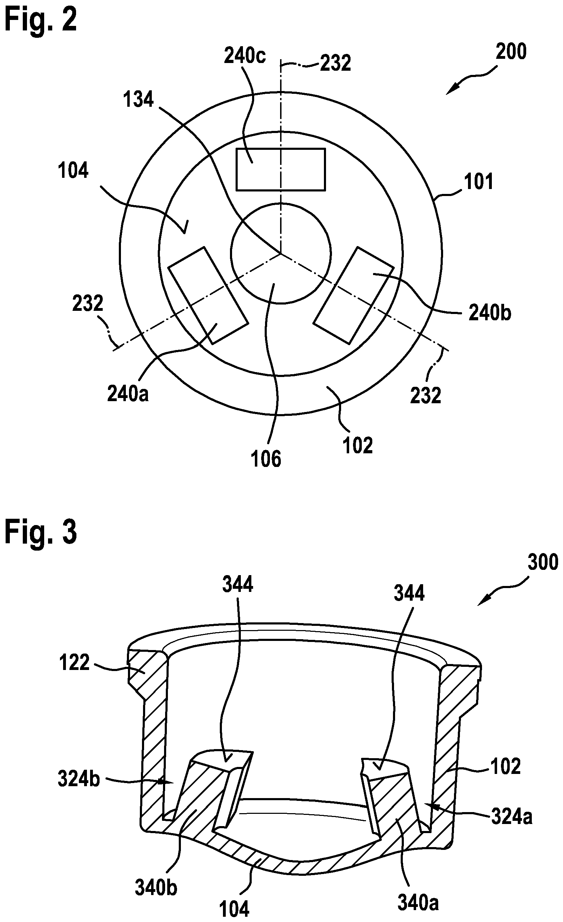

Figur 2 zeigt in Draufsicht eine alternative Ausgestaltung eines erfindungsgemäßen Ultraschallsensors 200. Der Aufbau entspricht im Wesentlichen dem des in Figur 1 dargestellten Ultraschallsensors 100. Gleiche Elemente sind mit den gleichen Bezugszeichen versehen. Im Unterschied zu der in Figur 1 dargestellten Ausführung sind bei dem gezeigten Ultraschallsensor 100 drei Masseelemente 240a, 240b und 240c auf der Bodenfläche 104 angeordnet. Die Masseelemente 240a, 240b und 240c weisen eine rechteckige Grundfläche auf und sind im Wesentlichen kubisch ausgebildet. Sie sind regelmäßig um das piezoelektrische Wandlerelement 106 angeordnet, wobei die Mittelachsen 232 der Masseelemente 240a, 240b und 240c sich auf der Symmetrieachse 134 schneiden und benachbarte Mittelachsen 232 jeweils einen Winkel von 120° zwischen sich einschließen.

Figur 3 zeigt in Schnittansicht eine alternative Ausgestaltung eines erfindungsgemäßen Ultraschallsensors 300. Der Aufbau entspricht im Wesentlichen dem des in Figur 1 dargestellten Ultraschallsensors 100. Gleiche Elemente sind mit den gleichen Bezugszeichen versehen. In der gewählten Darstellung ist eine Auslenkung der Bodenfläche 104 bei einer Anregung der ersten Schwingungsform überhöht dargestellt. Auf die Darstellung des Wandlerelements 106, das zentral auf der Bodenfläche 104 angeordnet ist, wurde aus Gründen der Übersichtlichkeit verzichtet. Es sind zwei Masseelemente 340a und 340b auf der Bodenfläche 104 angeordnet. Die Masseelemente 340a und 340b sind im Wesentlichen als Hohlzylindersegmente ausgebildet, die einander gegenüberliegend auf der Bodenfläche 104 angeordnet sind. Die Stirnflächen 344 der Masseelemente 340a und 340b sind in diesem Ausführungsbeispiel parallel zur Bodenfläche 104 ausgebildet, bezogen auf einen nicht-schwingenden Zustand des Ultraschallsensors 300.

Wie aus der Darstellung der Auslenkung der Bodenfläche 104 in der dargestellten ersten Schwingungsform hervorgeht, ist in den Bereichen der Bodenfläche, in denen die Masseelemente 340a und 340b angeordnet sind, eine vergleichsweise geringe Auslenkung vorhanden.

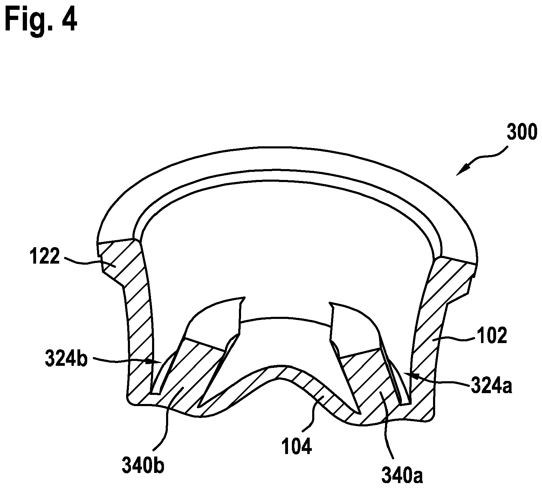

Figur 4 zeigt in Schnittansicht des Ultraschallsensors 300 aus Figur 3, wobei in dieser Figur eine Auslenkung der Bodenfläche 104 bei einer Anregung der dritten Schwingungsform überhöht dargestellt ist. Wie aus der Darstellung der Auslenkung der Bodenfläche 104 in der dargestellten Schwingungsform hervorgeht, ist in den Bereichen der Bodenfläche, in denen die Masseelemente 340a und 340b angeordnet sind, bei Anregung der dritten Schwingungsform eine im Vergleich zur ersten Schwingungsform große Auslenkung vorhanden. Der Widerstand, den die Masseelemente 340a und 340b gegen die Schwingung der Bodenfläche 104 ausüben ist demzufolge stärker, als bei der ersten Schwingungsform. Dadurch verschiebt sich die Resonanzfrequenz der dritten Schwingungsform zu tieferen Frequenzen. Ferner weisen beide Schwingungsformen durch die Anordnung der Masseelemente 340a und 340b eine ähnliche Richtcharakteristik der abgestrahlten Ultraschallwellen auf.

Ebenfalls in Figur 4 deutlich zu erkennen ist, dass bei Anregung des Ultraschallsensors 300 durch das nicht dargestellte Wandlerelement 106, nicht nur die Bodenfläche 104 eine Schwingung ausführt. Auch die Seitenwand 102 erfährt eine, wen auch deutlich schwächere, Verformung.

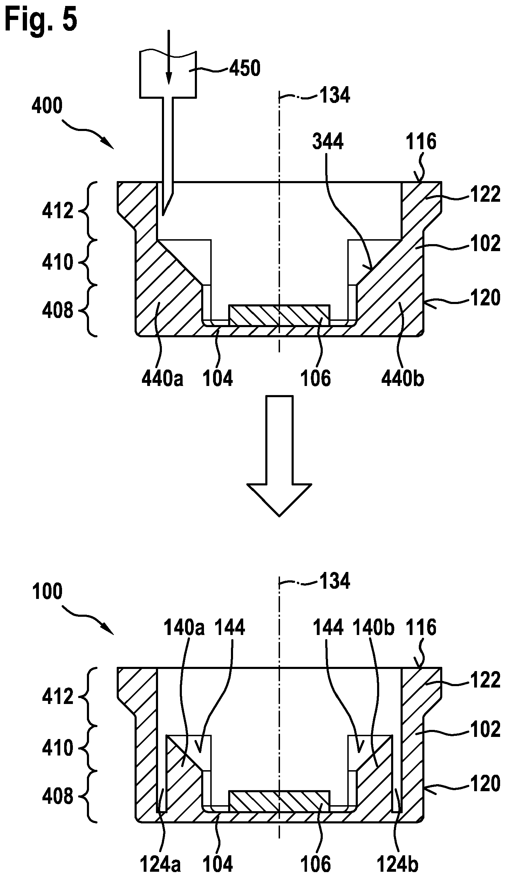

Figur 5 verdeutlicht ein erfindungsgemäßes Verfahren zur Herstellung eines Ultraschallsensors 100, der in diesem Beispiel dem in Figur 1 dargestellten Ultraschallsensor 100 entspricht. Dazu wird zunächst ein Gehäuse 400 bereitgestellt. Das Gehäuse 400 weist eine umlaufende Seitenwand 102 und eine Bodenfläche 104, die als Membran ausgebildet ist. Auf der Bodenfläche 104 ist ein Wandlerelement 106 zur Erzeugung von Ultraschallschwingungen angebracht ist. Die Seitenwand 102 weist einen unteren Seitenwandabschnitt 408 auf, in welchem die Seitenwand 102 in einer zur Bodenfläche 104 parallelen Ebene ein rotationsasymmetrisches Profil aufweist. Dies ist durch zwei verdickte Bereiche 440a und 440b realisiert, die als sich gegenüberliegende Verdickungen der Seitenwand 102 im unteren Seitenwandabschnitt 408 und im Übergangsabschnitt 410, ausgebildet sind. Weiterhin weist die Seitenwand 102 einen oberen Seitenwandabschnitt 412 auf, in welchem die Seitenwand 102 zu einem oberen Rand 116 der Seitenwand 102 hin in ein wesentlich rotationssymmetrisches Profil übergeht. Im einem Übergangsabschnitt 410 verläuft die Innenkontur 344 der Verdickungen in den Bereichen 440a und 440b dagegen in solchen Abschnitten, die in der Projektion entlang der Symmetrieachse 134 außerhalb des Umrisses der Bodenfläche 104 liegen, entlang einer Mantelfläche 344 eines nach unten zulaufenden Kegels, dessen Spitze auf der Symmetrieachse 134 liegt.

Mittels eines geeigneten Werkzeugs 450, das hier nur schematisch angedeutet ist, werden zwei vertikale Schlitze 124a und 124b in den Übergangsabschnitt 410 und in den unteren Seitenwandabschnitt 408 eingebracht, wodurch aus den beiden durch die Bereiche 440a und 440b gebildeten gegenüberliegenden Verdickungen, zwei Masseelemente 140a und 140b ausgebildet werden, wie im unteren Teil der Figur 5 dargestellt ist.

Durch die Erhöhung der Gesamtmasse der schwingenden Membran 104 durch die Masseelemente 140a und 140b verringert sich die Frequenz der ersten Eigenschwingung im Vergleich zum Gehäuse 400 vor der Einbringung der Schlitze 124a und 124b. Eine tiefere Frequenz lässt zwar eigentlich auf eine Vergrößerung des Öffnungswinkels des abgestrahlten Schalls schließen. Dadurch, dass jedoch eine größere mitschwingende Fläche entsteht, findet eine akustische Fokussierung des abgestrahlten Schalls statt, so dass die Richtcharakteristik des Ultraschallsensors 100 keine große Änderung bezüglich der Richtcharakteristik des Gehäuses 400 erfährt.

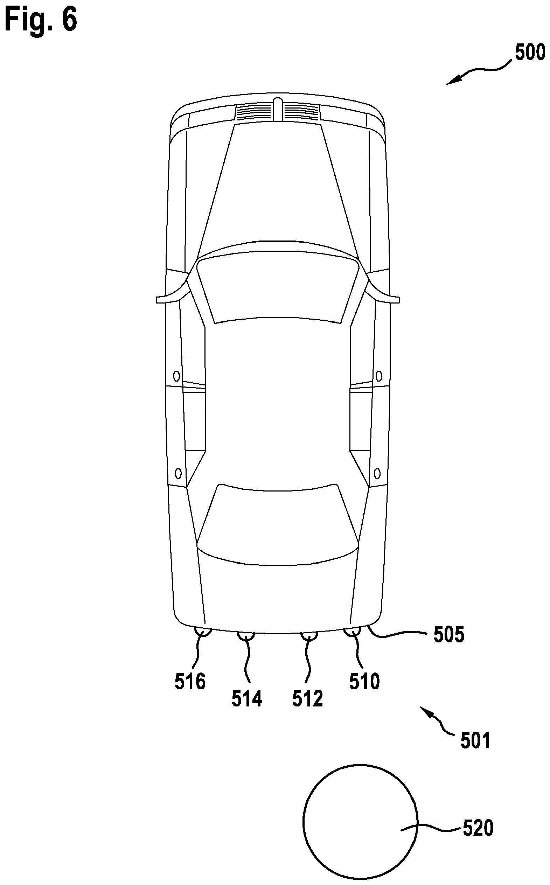

Figur 6 zeigt ein Fahrzeug 500 mit einer erfindungsgemäßen Vorrichtung 501 zur Messung eines Abstands zwischen dem Fahrzeug 500 und einem Hindernis 520. Die Vorrichtung 501 kann beispielsweise Teil eines Parkassistenzsystems sein. Die Vorrichtung umfasst vier Ultraschallsensoren 510, 512, 514 und 516 die an der hinteren Stoßstange 505 des Fahrzeugs 500 angeordnet sind, Die Ultraschallsensoren 510, 512, 514 und 516 sind erfindungsgemäß aufgebaut, beispielsweise nach einem der Ausführungsbeispiele aus den Figuren 1 bis 4. Bevorzugt sind alle Ultraschallsensoren gleichartig aufgebaut. Alternativ oder zusätzlich ist es möglich, die Ultraschallsensoren 510, 512, 514 und 516 an der vorderen Stoßstange und oder an den Seiten des Fahrzeugs 500 anzubringen. Ebenso ist es möglich mehr oder weniger Ultraschallsensoren zu verwenden.

Mit der Vorrichtung 501 kann das erfindungsgemäße Verfahren zur Abstandsmessung durchgeführt werden. In einer ersten Phase der Messung sendet ein erster Ultraschallsensor 510 ein akustisches Signal bei einer ersten Frequenz von beispielsweise 50 kHz. Dies entspricht der Anregung der 1-1 Schwingungsform des Ultraschallsensors 510. Zeitgleich sendet ein zweiter Ultraschallsensor 512 ein akustisches Signal bei einer zweiten Frequenz von beispielsweise 80 kHz. Dies entspricht der Anregung der 3-1 Schwingungsform des Ultraschallsensors 512. Beide akustischen Signale werden am Hindernis 520 reflektiert. Die Echosignale werden von allen Ultraschallsensoren 510, 512, 514 und 516 empfangen. Dabei kann jeder Ultraschallsensor 510, 512, 514 und 516 durch die unterschiedlichen Frequenzen der Echosignale erkennen, von welchem Ultraschallsensor 510 oder 512 das Ausgangssignal ausgesendet wurde, beispielsweise durch Signaltrennung mittels eines Bandpassfilters. Aus den Laufzeiten der Echosignale sowie den bekannten Abständen der Ultraschallsensoren 510, 512, 514 und 516 untereinander kann mithilfe einer Auswerteelektronik (nicht dargestellt) der Abstand und die Position des Hindernisses 520 relativ zum Fahrzeug 500 in bekannter Weise bestimmt werden.

In einer zweiten Phase der Messung sendet ein dritter Ultraschallsensor 514 ein akustisches Signal bei einer ersten Frequenz von beispielsweise 50 kHz. Zeitgleich sendet ein vierter Ultraschallsensor 516 ein akustisches Signal bei einer zweiten Frequenz von beispielsweise 80 kHz. Wieder werden beide akustischen Signale am Hindernis 520 reflektiert und die Echosignale werden von allen Ultraschallsensoren 510, 512, 514 und 516 empfangen. Die Separation der Signale erfolgt, wie bereits in der ersten Phase der Messung durch Trennung der Frequenzen, etwa durch ein Bandpassfilter. Die zweite Phase der Messung dient der Validierung und Erhöhung der Genauigkeit der ersten Messung.

Dadurch dass immer zwei Ultraschallsensoren 510 und 512 sowie 514 und 514 gleichzeitig oder mit sehr kurzem zeitlichen Abstand senden können, verkürzt sich die gesamte Messdauer ungefähr einen Faktor Zwei.

Grundsätzlich ist es auch denkbar im Rahmen der Erfindung einen Ultraschallsensor vorzusehen, der drei oder mehr anregbare Resonanzfrequenzen aufweist, die in einem für die Abstandsmessung verwendbaren Frequenzbereich von kleiner als 100 kHz, bevorzugt kleiner als 80 kHz liegen. In dem Fall könnte das erfindungsgemäße Messverfahren drei oder mehr gleichzeitig sendende Ultraschallsensoren vorsehen.

Figur 7 zeigt schematisch eine Membran 104, sowie eine erste Schwingungsform (Grundform) 10 der Membran im Zustand maximaler Auslenkung, die im Wesentlichen einer halben Sinusschwingung entspricht. Es ist ferner eine zweite Schwingungsform 20 dargestellt, die im Wesentlichen einer ganzen Sinusschwingung entspricht. Die zweite Schwingungsform 20 ist eine sogenannte symmetrische Schwingungsform, die einem ganzzahligen Vielfachen einer Sinusschwingung entspricht. Die zweite Schwingungsform 20 kann nicht durch ein mittig auf der Membran 104 angeordnetes Wandlerelement (nicht dargestellt) angeregt werden. Es ist ferner die dritte Schwingungsform 30 dargestellt, die im Wesentlichen einer eineinhalbfachen Sinusschwingung entspricht.

## Patentansprüche

1. Ultraschallsensor (100, 200, 300) umfassend ein
- Gehäuse (101) mit einer umlaufenden Seitenwand (102) und einer Bodenfläche (104), die als Membran ausgebildet ist,
- ein auf der Bodenfläche (104) angeordnetes Wandlerelement (106) zur Erzeugung und Erfassung von Ultraschallschwingungen,
- mindestens ein auf der Bodenfläche (104) angeordnetes Masseelement (140a, 140b, 240a, 240b, 240c, 340a, 340b),
**dadurch gekennzeichnet, dass**
das mindestens eine Masseelement (140a, 140b, 240a, 240b, 240c, 340a, 340b) derart angeordnet ist, dass sich eine durch Masseelemente (140a, 140b, 240a, 240b, 240c, 340a, 340b) auf die Membran ausgeübte Kraft und/oder Drehmoment mit steigender Schwingungsfrequenz erhöht, wobei das Wandlerelement (106) mittig auf der Bodenfläche (104) befestigt ist, und die Masseelemente, insbesondere mit regelmäßigen Abständen und/oder symmetrisch, um das Wandlerelement (106) auf der Bodenfläche (104) angeordnet sind, wobei aus einem unteren Abschnitt der umlaufenden Seitenwand zumindestens ein im Wesentlichen hohlzylinderförmiges oder hohlzylindersegmentförmiges Masseelement (140a, 140b, 340a, 340b) ausgebildet ist.

2. Ultraschallsensor nach Anspruch 1, **dadurch gekennzeichnet, dass** die Resonanzfrequenz der ersten Eigenschwingung des Ultraschallsensors (100, 200, 300) 30 kHz bis 60 kHz beträgt und die Frequenz der nächsten anregbaren Eigenschwingung weniger als 100 kHz, insbesondere weniger als 80 kHz beträgt.

3. Ultraschallsensor nach einem der Ansprüche 1 oder 2, **dadurch gekennzeichnet, dass** der Ultraschallsensor (100, 200, 300) zwei Masseelemente (140a, 140b, 340a, 340b) aufweist, die bezüglich einer senkrecht zur Bodenfläche (104) verlaufenden Symmetrieebene (132) spiegelsymmetrisch zueinander angeordnet sind.

4. Ultraschallsensor nach einem der Ansprüche 1 bis 3, **dadurch gekennzeichnet, dass** mindestens ein Masseelement (140a, 140b, 340a, 340b) eine, insbesondere teilzylindrische, Außenfläche (144a, 144b) aufweist, die konzentrisch zu der umlaufenden Seitenwand (102) ausgerichtet ist.

5. Ultraschallsensor nach einem der Ansprüche 1 bis 4, **dadurch gekennzeichnet, dass** das mindestens eine Masseelement (140a, 140b, 240a, 240b, 240c, 340a, 340b) eine Höhe von 30 bis 80 % der Gesamthöhe (118) des Gehäuses (101) aufweist.

6. Ultraschallsensor nach einem der Ansprüche 1 bis 5, **dadurch gekennzeichnet, dass** das Wandlerelement (106) mittig auf der Bodenfläche (104) angeordnet ist.

7. Ultraschallsensor nach Anspruch 6, **dadurch gekennzeichnet, dass** das mindestens eine Masseelement (140a, 140b, 240a, 240b, 240c, 340a, 340b) eine Impedanz (Z) aufweist, die eine dritte Schwingungsform der Membran (104) derart verändert, dass die dritte Schwingungsform der Membran (104) der ersten Schwingungsform der Membran (104) angenähert ist, wobei insbesondere die Richtcharakteristik der dritten Schwingungsform der Membran (104) an die Richtcharakteristik der ersten Schwingungsform der Membran (104) angepasst ist.

8. Verfahren zur Herstellung eines Ultraschallsensors (100) nach einem der Ansprüche 1 bis 7, umfassend die Schritte:
a. Bereitstellen eines Gehäuses (400) mit umlaufenden Seitenwand und einer Bodenfläche, die als Membran ausgebildet ist, auf welcher ein Wandlerelement (106) zur Erzeugung von Ultraschallschwingungen angebracht ist, wobei die Seitenwand (101) aufweist:
- einen unteren Seitenwandabschnitt (408, 410), in welchem die Seitenwand (102) in einer zur Bodenfläche (104) parallelen Ebene ein rotationsasymmetrisches Profil aufweist;
und
- einen oberen Seitenwandabschnitt (412), in welchem die Seitenwand (102) zu einem oberen Rand (116) der Seitenwand (102) hin in ein wesentlich rotationssymmetrisches Profil übergeht
b. Einbringen mindestens eines Schlitzes (124a, 124b) in einen unteren Seitenwandabschnitt (408, 410) derart, dass mindestens ein auf der Bodenfläche (104) angeordnetes Masseelement (140a, 140b) gebildet wird.

9. Verfahren nach Anspruch 8, **dadurch gekennzeichnet, dass** das Einbringen der Schlitze (124a, 124b) derart erfolgt, dass in mindestens einem Bereich (440a, 440b) des unteren Seitenwandabschnitts (408, 410) ein im Wesentlichen hohlzylindersegmentförmiges Masseelement (140a, 140b) gebildet wird.

10. Verfahren zur Herstellung eines Ultraschallsensors (100) nach einem der Ansprüche 1 bis 7, umfassend die Schritte:
- Bereitstellen eines Gehäuses (400) mit umlaufenden Seitenwand und einer Bodenfläche, die als Membran ausgebildet ist, auf welcher ein Wandlerelement (106) zur Erzeugung von Ultraschallschwingungen angebracht ist, wobei durch Fügen, insbesondere Kleben mindestens ein Masseelement auf der Membran angebracht wird.

11. Vorrichtung (501) zur Messung eines Abstands zwischen einem Fahrzeug (500) und einem Hindernis (520), **dadurch gekennzeichnet dass** die Vorrichtung (501) mindestens zwei akustische Sensoren (510, 512, 514, 516) umfasst, die an dem Fahrzeug (500) angeordnet sind, wobei die Sensoren (510, 512, 514, 516) als Ultraschallsensoren nach einem der Ansprüche 1 bis 7 ausgebildet sind.

12. Verfahren zur Bestimmung eines Abstands zwischen einem Fahrzeug (500) und einem Hindernis (520) mittels einer Vorrichtung (501) nach Anspruch 11, mit folgenden Schritten
- ein erster Ultraschallsensor (510, 514) sendet ein akustisches Signal einer ersten Frequenz aus,
- ein zweiter Ultraschallsensor (512, 516) sendet zeitgleich oder innerhalb einer festgelegten Sendezykluszeit ein akustisches Signal einer zweiten Frequenz aus,
- ein erstes Echosignal des ersten akustischen Signals wird von mindestens einem der Ultraschallsensoren (510, 512, 514, 516) erfasst,
- ein zweites Echosignal des zweiten akustischen Signals wird von mindestens einem der Ultraschallsensoren (510, 512, 514, 516) erfasst,
- der Abstand zwischen dem Fahrzeug (500) und dem Hindernis (520) wird abhängig von den erfassten Größen berechnet.

13. Verfahren nach Anspruch 12, **dadurch gekennzeichnet, dass** das Echosignal des ersten akustischen Signals und das Echosignal des zweiten akustischen Signals von einem Ultraschallsensor (510, 512, 514, 516) empfangen werden, wobei eine Trennung der Signale erfolgt, insbesondere mittels eines Bandpass-Filters

## Claims

1. Ultrasound sensor (100, 200, 300) comprising
- a housing (101) having a circumferential side wall (102) and a bottom surface (104) which is formed as a diaphragm,
- a converter element (106) arranged on the bottom surface (104) for generating and detecting ultrasonic vibrations,
- at least one mass element (140a, 140b, 240a, 240b, 240c, 340a, 340b) arranged on the bottom surface (104),
**characterized in that**
the at least one mass element (140a, 140b, 240a, 240b, 240c, 340a, 340b) is arranged in such a way that a force and/or torque exerted on the diaphragm by mass elements (140a, 140b, 240a, 240b, 240c, 340a, 340b) increases with increasing vibration frequency, wherein the converter element (106) is fixed centrally on the bottom surface (104), and the mass elements are arranged on the bottom surface (104) in particular at regular intervals and/or symmetrically around the converter element (106), wherein a mass element (140a, 140b, 340a, 340b) shaped at least substantially like a hollow cylinder or hollow cylindrical segment is formed from a lower section of the circumferential side wall.

2. Ultrasound sensor according to Claim 1, **characterized in that** the resonant frequency of the first natural vibration of the ultrasound sensor (100, 200, 300) is 30 kHz to 60 kHz, and the frequency of the next excitable natural vibration is less than 100 kHz, in particular less than 80 kHz.

3. Ultrasound sensor according to either of Claims 1 and 2, **characterized in that** the ultrasound sensor (100, 200, 300) has two mass elements (140a, 140b, 340a, 340b) which, with respect to a plane of symmetry (132) extending at right angles to the bottom surface (104), are arranged with mirror-symmetry relative to each other.

4. Ultrasound sensor according to one of Claims 1 to 3, **characterized in that** at least one mass element (140a, 140b, 340a, 340b) has an in particular partly cylindrical outer surface (144a, 144b), which is aligned concentrically with respect to the circumferential side wall (102).

5. Ultrasound sensor according to one of Claims 1 to 4, **characterized in that** the at least one mass element (140a, 140b, 240a, 240b, 240c, 340a, 340b) has a height of 30 to 80% of the total height (118) of the housing (101).

6. Ultrasound sensor according to one of Claims 1 to 5, **characterized in that** the converter element (106) is arranged centrally on the bottom surface (104).

7. Ultrasound sensor according to Claim 6, **characterized in that** the at least one mass element (140a, 140b, 240a, 240b, 240c, 340a, 340b) has an impedance (Z) which changes a third waveform of the diaphragm (104) in such a way that the third waveform of the diaphragm (104) is brought close to the first waveform of the diaphragm (104), wherein in particular the directional characteristics of the third waveform of the diaphragm (104) is matched to the directional characteristics of the first waveform of the diaphragm (104).

8. Method for producing an ultrasound sensor (100) according to one of Claims 1 to 7, comprising the steps:
a. providing a housing (400) having a circumferential side wall (102) and a bottom surface which is formed as a diaphragm, on which a converter element (106) for generating ultrasonic vibrations is fitted, wherein the side wall (101) has:
- a lower side wall section (408, 410), in which the side wall has a rotationally symmetrical profile in a plane parallel to the bottom surface (104),
- an upper side wall section (412), in which the side wall (102) merges into a substantially rotationally symmetrical profile towards an upper edge (116) of the side wall (102),
b. introducing at least one slot (124a, 124b) into a lower side wall section (408, 410) in such a way that at least one mass element (140a, 140b) arranged on the bottom surface (104) is formed.

9. Method according to Claim 8, **characterized in that** the slots (124a, 124b) are introduced in such a way that a mass element (140a, 140b) shaped substantially like a hollow cylindrical segment is formed in at least one region (440a, 440b) of the lower side wall section (408, 410).

10. Method for producing an ultrasound sensor (100) according to one of Claims 1 to 7, comprising the steps:
- providing a housing (400) having a circumferential side wall and a bottom surface which is formed as a diaphragm, on which a converter element (106) for generating ultrasonic vibrations is fitted, at least one mass element being attached to the diaphragm by joining, in particular adhesive bonding.

11. Device (501) for measuring a distance between a vehicle (500) and an obstacle (520), **characterized in that** the device (501) comprises at least two acoustic sensors (510, 512, 514, 516), which are arranged on the vehicle (500), wherein the sensors (510, 512, 514, 516) are formed as ultrasound sensors according to one of Claims 1 to 7.

12. Method for determining a distance between a vehicle (500) and an obstacle (520) by means of a device (501) according to Claim 11, having the following steps
- a first ultrasound sensor (510, 514) emits an acoustic signal of a first frequency,
- a second ultrasound sensor (512, 516) emits an acoustic signal of a second frequency, at the same time or within a defined emission cycle time,
- a first echo signal from the first acoustic signal is detected by at least one of the ultrasound sensors (510, 512, 514, 516),
- a second echo signal from the second acoustic signal is detected by at least one of the ultrasound sensors (510, 512, 514, 516),
- the distance between the vehicle (500) and the obstacle (520) is calculated as a function of the detected variables.

13. Method according to Claim 12, **characterized in that** the echo signal from the first acoustic signal and the echo signal from the second acoustic signal are received by one ultrasound sensor (510, 512, 514, 516), wherein separation of the signals is carried out, in particular by means of a band-pass filter.

## Revendications

1. Capteur à ultrasons (100, 200, 300), comprenant
- un boîtier (101) ayant une paroi latérale (102) circonférentielle et une surface de fond (104) qui est réalisée sous la forme d'une membrane,
- un élément transducteur (106) disposé sur la surface de fond (104) et destiné à générer et à détecter des oscillations ultrasonores,
- au moins un élément de masse (140a, 140b, 240a, 240b, 240c, 340a, 340b) disposé sur la surface de fond (104),
**caractérisé en ce que**
l'au moins un élément de masse (140a, 140b, 240a, 240b, 240c, 340a, 340b) est disposé de telle sorte qu'une force et/ou un couple exercés sur la membrane par des éléments de masse (140a, 140b, 240a, 240b, 240c, 340a, 340b) augmentent à mesure que la fréquence d'oscillation augmente, l'élément transducteur (106) étant fixé au centre sur la surface de fond (104) et les éléments de masse étant disposés autour de l'élément transducteur (106) sur la surface de fond (104), notamment à distances régulières et/ou symétriquement, au moins un élément de masse (140a, 140b, 340a, 340b) sensiblement en forme de segments de cylindre creux ou en forme de cylindre creux étant formé à partir d'une portion inférieure de la paroi latérale circonférentielle.

2. Capteur à ultrasons selon la revendication 1, **caractérisé en ce que** la fréquence de résonance de la première oscillation propre du capteur à ultrasons (100, 200, 300) est de 30 kHz à 60 kHz et la fréquence de la prochaine oscillation propre pouvant être excitée est inférieure à 100 kHz, notamment inférieure à 80 kHz.

3. Capteur à ultrasons selon l'une des revendications 1 et 2, **caractérisé en ce que** le capteur à ultrasons (100, 200, 300) possède deux éléments de masse (140a, 140b, 340a, 340b) qui sont disposés selon une symétrie en miroir l'un par rapport à l'autre en référence à un plan de symétrie (132) qui s'étend perpendiculairement à la surface de fond (104).

4. Capteur à ultrasons selon l'une des revendications 1 à 3, **caractérisé en ce qu'**au moins un élément de masse (140a, 140b, 340a, 340b) possède une surface extérieure (144a, 144b) notamment partiellement cylindrique, laquelle est orientée concentriquement par rapport à la paroi latérale (102) circonférentielle.

5. Capteur à ultrasons selon l'une des revendications 1 à 4, **caractérisé en ce que** l'au moins un élément de masse (140a, 140b, 240a, 240b, 240c, 340a, 340b) présente une hauteur qui est de 30 à 80 % de la hauteur totale (118) du boîtier (101).

6. Capteur à ultrasons selon l'une des revendications 1 à 5, **caractérisé en ce que** l'élément transducteur (106) est disposé au centre sur la surface de fond (104).

7. Capteur à ultrasons selon la revendication 6, **caractérisé en ce que** l'au moins un élément de masse (140a, 140b, 240a, 240b, 240c, 340a, 340b) possède une impédance (Z) qui modifie une troisième forme d'oscillation de la membrane (104) de telle sorte que la troisième forme d'oscillation de la membrane (104) se rapproche de la première forme d'oscillation de la membrane (104), la caractéristique d'orientation de la troisième forme d'oscillation de la membrane (104) étant notamment adaptée à la caractéristique d'orientation de la première forme d'oscillation de la membrane (104).

8. Procédé de fabrication d'un capteur à ultrasons (100) selon l'une des revendications 1 à 7, comprenant les étapes suivantes :
a. fourniture d'un boîtier (400) ayant une paroi latérale circonférentielle et une surface de fond qui est réalisée sous la forme d'une membrane, sur laquelle est monté un élément transducteur (106) destiné à générer des oscillations ultrasonores, la surface latérale (101) possédant :
- une portion de paroi latérale inférieure (408, 410) dans laquelle la paroi latérale (102) présente un profil asymétrique en rotation dans un plan parallèle à la surface de fond (104) ;
et
- une portion de paroi latérale supérieure (412) dans laquelle la paroi latérale (102) se transforme en un profil sensiblement symétrique en rotation en direction d'un bord supérieur (116) de la paroi latérale (102),
b. incorporation d'au moins une fente (124a, 124b) dans une portion de paroi latérale inférieure (408, 410) de manière à former au moins un élément de masse (140a, 140b) disposé sur la surface de fond (104).

9. Procédé selon la revendication 8, **caractérisé en ce que** l'incorporation de la fente (124a, 124b) est effectuée de telle sorte qu'un élément de masse (140a, 140b) sensiblement en forme de segments de cylindre creux est formé dans au moins une zone (440a, 440b) de la portion de paroi latérale inférieure (408, 410).

10. Procédé de fabrication d'un capteur à ultrasons (100) selon l'une des revendications 1 à 7, comprenant les étapes suivantes :
- fourniture d'un boîtier (400) ayant une paroi latérale circonférentielle et une surface de fond qui est réalisée sous la forme d'une membrane, sur laquelle est monté un élément transducteur (106) destiné à générer des oscillations ultrasonores, au moins un élément de masse étant monté sur la membrane par assemblage, notamment par collage.

11. Dispositif (501) de mesure d'une distance entre un véhicule (500) et un obstacle (520), **caractérisé en ce que** le dispositif (501) comporte au moins deux capteurs acoustiques (510, 512, 514, 516) qui sont disposés sur le véhicule (500), les capteurs (510, 512, 514, 516) étant réalisés sous la forme de capteurs à ultrasons selon l'une des revendications 1 à 7.

12. Procédé de détermination d'une distance entre un véhicule (500) et un obstacle (520) au moyen d'un dispositif (501) selon la revendication 11, comprenant les étapes suivantes :
- un premier capteur à ultrasons (510, 514) émet un signal acoustique à une première fréquence,
- un deuxième capteur à ultrasons (512, 516) émet simultanément, ou au sein d'un temps de cycle d'émission fixé, un signal acoustique à une deuxième fréquence,
- un premier signal d'écho du premier signal acoustique est détecté par au moins l'un des capteurs à ultrasons (510, 512, 514, 516),
- un deuxième signal d'écho du deuxième signal acoustique est détecté par au moins l'un des capteurs à ultrasons (510, 512, 514, 516),
- la distance entre le véhicule (500) et l'obstacle (520) est calculée en fonction des grandeurs détectées.

13. Procédé selon la revendication 12, **caractérisé en ce que** le signal d'écho du premier signal acoustique et le signal d'écho du deuxième signal acoustique sont reçus par un capteur à ultrasons (510, 512, 514, 516), une séparation des signaux étant effectuée, notamment au moyen d'un filtre passe-bande.
